Europäisches Patentamt

European Patent Office

Office européen des brevets

(19)

(11) Numéro de publication : **0 343 049 B1**

(12) **FASCICULE DE BREVET EUROPEEN**

(45) Date de publication du fascicule du brevet :
**19.08.92 Bulletin 92/34**

(51) Int. Cl.⁵ : **B62D 13/04, B62D 13/06**

(21) Numéro de dépôt : **89401328.3**

(22) Date de dépôt : **12.05.89**

(54) **Dispositif de commande automatique des roues directrices d'un véhicule tracté.**

(30) Priorité : **13.05.88 FR 8806458**

(43) Date de publication de la demande :
**23.11.89 Bulletin 89/47**

(45) Mention de la délivrance du brevet :
**19.08.92 Bulletin 92/34**

(84) Etats contractants désignés :
**AT BE CH DE ES GB GR IT LI LU NL SE**

(56) Documents cités :
**EP-A- 0 235 402**
**WO-A-87/01999**
**DE-A- 1 957 662**
**DE-A- 3 435 394**
**US-A- 4 740 006**

(73) Titulaire : **A.C.T.M.**
**Avenue de Rochemaure**
**F-26200 Montélimar (FR)**

(72) Inventeur : **Aubert, Serge**
**2 rue de la Ronce**
**F-92410 Ville d'Avray (FR)**
Inventeur : **Ayme, Jacques**
**Petit chemin de Saillans**
**F-26200 Montélimar (FR)**
Inventeur : **Bournac, Jean-Paul**
**rue Roger Chancel**
**F-26200 Montélimar (FR)**

(74) Mandataire : **Hud, Robert**
**Cabinet COLLIGNON 6, rue de Madrid**
**F-75008 Paris (FR)**

EP 0 343 049 B1

Jouve, 18, rue Saint-Denis, 75001 PARIS

## Description

L'invention a pour objet un dispositif de direction automatique des roues d'une remorque ou d'une semi-remorque en réponse à l'angle introduit entre la direction de l'axe du tracteur et celle de l'axe de la remorque ou de la semi-remorque à la suite du braquage des roues directrices du tracteur.

Les semi-remorques à plusieurs essieux pour le transport de charges lourdes sont fréquemment équipées de roues directrices, d'une part pour éviter le "ripage" au sol des roues pneumatiques et, d'autre part, pour assurer une meilleure inscription en courbes de la semi-remorque derrière le tracteur.

Les systèmes connus utilisés pour commander la direction des roues de la semi-remorque sont généralement basés sur une transmission mécanique (agissant par une timonerie appropriée) ou hydraulique (agissant par un système de vérins travaillant en transfert de volumes) qui transmet aux roues directrices de la semi-remorque les variations de l'angle formé entre l'axe du tracteur et l'axe de la semi-remorque, angle qui est mesuré au pivot d'attelage de la semi-remorque au tracteur. Ces systèmes connus présentent de nombreux inconvénients, en particulier au niveau du poids, de la difficulté d'installation et d'une fiabilité relative.

On connaît aussi, par le document DE-A-1 957 662, un dispositif électronique de commande automatique des roues directrices d'un véhicule tracté qui comprend des moyens pour détecter sur le pivot d'attelage une information de direction relative à une commande de modification de l'angle entre le tracteur et le véhicule tracté. Des moyens sont prévus pour traiter cette information de direction et fournir un signal théorique de direction des roues du véhicule tracté, et d'autres moyens mesurent la valeur réelle de l'angle de direction des roues dudit véhicule. D'autres moyens comparent ladite valeur théorique et ladite valeur réelle de l'angle de direction et fournissent un signal correcteur proportionné à l'écart constaté, alors que des moyens appliquent ladite correction aux roues du véhicule tracté.

Le document DE-A-3 435 394 concerne un dispositif de correction automatique de la position d'une remorque lors d'une marche arrière. Ce dispositif utilise des capteurs d'angles disposés sur les roues directrices du tracteur, dont les informations qu'ils fournissent sont communiquées, après traitement, au circuit de freinage à air comprimé pour envoyer de l'air sous pression soit dans les freins agissant sur les roues droites de l'avant-train de la remorque, soit dans les freins agissant les roues gauches de cet avant-train.

Il est donc connu, par le document DE-A-1 957 662, de procéder de façon continue en marche avant à la comparaison de l'angle théorique et de l'angle de braquage des roues du véhicule tracté ainsi que, si nécessaire, à la correction de la discordance éventuelle existant entres ces deux valeurs. Alors qu'en marche avant l'angle correcteur doit s'additionner à l'angle mesuré des roues du véhicule tracté pour rapprocher l'arrière de celui-ci de la courbe circonscrite idéale, en marche arrière l'obtention du même résultat s'effectue en soustrayant l'angle correcteur de l'angle mesuré. La définition du signe et de la grandeur de l'angle correcteur nécessite alors de connaître l'angle théorique au pivot d'attelage et de le comparer à la valeur mesurée de cet angle.

L'invention propose un dispositif de commande automatique des roues directrices d'un véhicule tracté qui comporte un dispositif complémentaire permettant d'obtenir une direction automatique des roues du véhicule tracté en marche arrière.

En prenant le cas d'une semi-remorque attelée à un véhicule tracteur, on désignera :
– par $\alpha 1$ l'angle moyen d'orientation des roues du tracteur,
– par $\alpha 2$ l'angle moyen au pivot d'attelage entre l'axe longitudinal de la semi-remorque et celui du véhicule tracteur, cet angle étant celui de la position adoptée naturellement par la semi-remorque dans une courbe,
– par $\alpha 3$ l'angle moyen selon lequel sont orientables les roues de la semi-remorque, cet angle $\alpha 3$ étant choisi pour assurer l'inscription en courbe de la semi-remorque la plus favorable.

Selon l'invention, le dispositif de commande automatique des roues directrices d'un véhicule tracté comprend des moyens pour détecter sur le pivot d'attelage une information de direction $\alpha 2$ relative à une commande de modification de l'angle entre l'axe du tracteur et celui du véhicule tracté, des moyens pour traiter ladite information de direction et fournir un signal théorique $\alpha 3$ de direction des roues du véhicule tracté, des moyens pour mesurer la valeur réelle de l'angle de direction des roues dudit véhicule tracté, des moyens pour comparer ladite valeur théorique et ladite valeur mesurée de l'angle de direction des roues du véhicule tracté et pour fournir un signal correcteur proportionnné à l'écart ainsi constaté, et des moyens pour appliquer ladite correction aux roues du véhicule tracté, et il se caractérise par des moyens pour recueillir sur les roues directrices du tracteur une information de direction $\alpha 1$ relative à la commande de modification de l'angle entre le tracteur et le véhicule tracté et par un système complémentaire permettant l'obtention d'une direction automatique des roues de la semi-remorque en marche arrière, ledit système complémentaire comprenant des moyens pour transformer dans un rapport défini $\dfrac{\alpha 2}{\alpha 1}$ une information de direction $\alpha 1$ mesurée sur les roues directrices du tracteur, des moyens pour comparer l'information transformée reçue desdits moyens de transformation et une information de direction α 2 mesurée au niveau de l'attelage entre le tracteur et le véhicule tracté et pour fournir un signal correcteur proportionné à l'écart ainsi mesuré, des moyens d'inversion du signe du signal correcteur issu desdits moyens de comparaison, et des moyens de totalisation qui réalisent la somme algébrique du signal correcteur issu des moyens d'inversion et du signal correcteur issu des moyens de comparaison du dispositif de commande automatique en marche avant, le signal correcteur final correspondant à ladite somme algébrique étant appliqué aux moyens de correction de la direction des roues du véhicule tracté.

Pour bien faire comprendre le dispositif selon l'invention on en décrira ci-après une forme d'exécution préférée et des variantes en référence au dessin schématique annexé dans lequel :

la figure 1 est une vue en plan d'une semi-remorque à roues directrices attelée à un tracteur, sur laquelle sont figurés les principaux composants de détection, de traitement et d'actionnement de la direction automatique de marche avant; sur cette figure la semi-remorque a été représentée en trait plein dans l'axe du tracteur et en trait mixte dans une position d'inscription en courbe ;

la figure 2 est une vue en plan du même ensemble constitué par un tracteur et une semi-remorque que celui représenté à la figure 1, comprenant les moyens pour l'actionnement de la direction automatique en marche avant et en marche arrière ;

la figure 2A est une vue de détail de la figure 2 montrant une roue directrice de la semi-remorque, cette figure illustrant la nécessité d'inverser le signe du signal correcteur pour maintenir, en marche arrière, la semi-remorque sur la courbe d'évolution définie par le conducteur du tracteur ; et

la figure 3 est une vue en plan, correspondant à la figure 1, montrant en variante l'application du dispositif selon l'invention à une semi-remorque avec bissel intégré, c'est-à-dire comportant en plus de ses roues arrière des roues situées vers l'avant, derrière le tracteur.

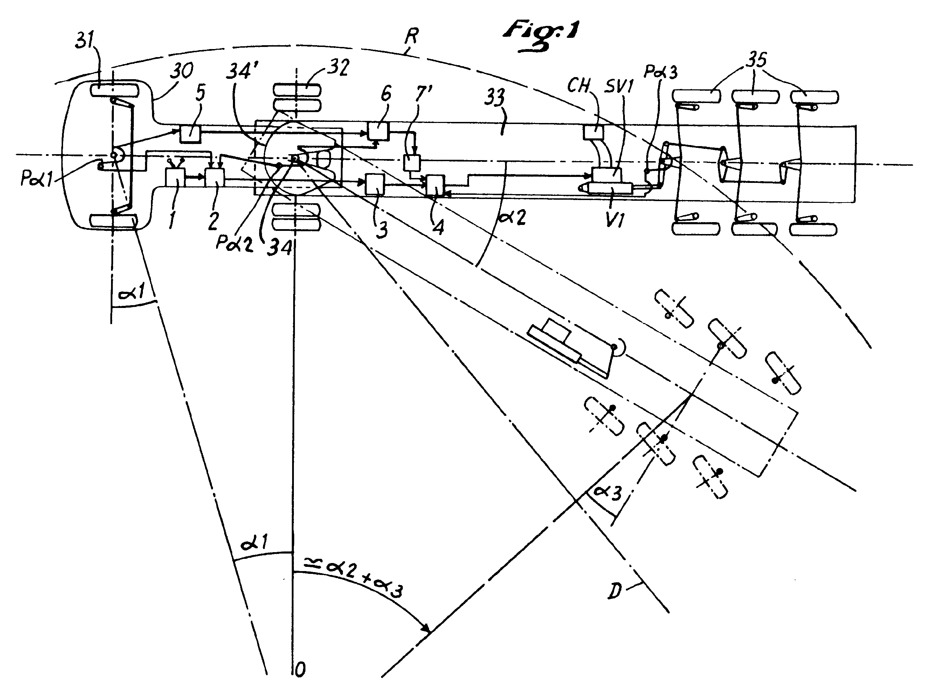

En référence à la figure 1, on a représenté un tracteur 30 avec son essieu avant directeur 31 et un essieu porteur 32 (il pourrait bien sûr y en avoir plusieurs). On a ausi représenté une semi-remorque 33 attelée au tracteur 30 par un pivot d'attelage 34 engagé dans un coupleur d'attelage 34'. La semi-remorque 33 comporte des essieux à roues directrices 35, au nombre de trois dans l'exemple représenté mais qui pourraient être plus ou moins nombreux. Sur cette figure on a représenté :

– en α1 l'angle moyen d'orientation des roues avant du tracteur 30,

– en α2 l'angle moyen au pivot d'attelage 34 entre l'axe longitudinal de la semi-remorque et l'axe longitudinal du tracteur. Cet angle α2 est celui de la position adoptée naturellement par la semi-remorque dans une courbe et qui correspond à l'annulation du "ripage" (c'est-à-dire de la dérive ou glissement latéral) des roues pneumatiques de la semi-remorque. Cette position de la semi-remorque est celle dans laquelle les axes de rotation des roues passent par le point unique O qui est le centre de la courbe d'inscription R de l'ensemble de véhicule articulé. L'angle α2 est donc fonction de l'angle α1,

– en α3 l'angle moyen selon lequel sont orientables les roues de la semi-remorque, cet angle α3 étant choisi pour assurer l'inscription en courbe de la semi-remorque la plus favorable, c'est-à-dire proche de la courbe R choisie par le conducteur du tracteur.

Si les roues de la semi-remorque n'étaient pas orientables, on aurait α3 = 0 , mais la semi-remorque "serrerait" au maximum pour éviter le ripage de ses roues, (position de l'axe de la semi-remorque représenté en D), c'est-à-dire que l'angle α2 croîtrait et prendrait une valeur sensiblement égale à α2 initial + α3.

On décrira maintenant le système selon l'invention de commande automatique des roues directrices 35 de la semi-remorque. L'orientation automatique selon l'angle α3 des roues de la semi-remorque peut être obtenue à partir de la détection soit de l'angle α1 des roues directrices 31 du tracteur, soit de l'angle α2 entre la semi-remorque et le tracteur qui se forme naturellement dans une courbe et qui est lui-même, comme on l'a vu plus haut, fonction de l'angle α1.

L'utilisation directe de l'angle α1 offre l'avantage de permettre l'orientation des roues de la semi-remorque en même temps que de celles du véhicule tracteur, quand le convoi est arrêté et si l'angle entre le tracteur et la semi-remorque l'autorise. L'utilisation de l'angle α2 permet d'éviter la présence de tout équipement complémentaire sur le véhicule tracteur.

Dans l'un et l'autre cas, les moyens utilisés selon l'invention pour obtenir l'orientation automatique appropriée des roues 35 de la semi-remorque comprennent principalement :

– un appareil P α1 ou P α2 de détection de l'angle α1 ou de l'angle α2. Cet appareil est constitué, dans l'exemple représenté, par un potentiomètre rotatif, mais tout autre appareil ou tout autre montage d'appareil procurant le même résultat pourrait être utilisé ;

– un appareil 1 de commande manuelle par manettes, permettant de substituer à la commande automatique des roues de la semi-remorque une commande indépendante, selon la valeur affichée sur cet appareil par le conducteur. Un tel appareil, utilisable pour la réalisation de manoeuvres spéciales, est constitué dans l'exemple représenté par un potentiomètre rotatif avec manette de calage ;

– un sélecteur 2 relié d'une part à l'appareil P α1 ou P α2 et d'autre part à l'appareil 1 et permettant de sélectionner soit un fonctionnement en direction automatique, soit un fonctionnement en direction manuelle

– un opérateur de rapport 3 transformant le signal issu de P α1, de P α2 ou de l'appareil 1 selon un rapport prédéfini $\alpha\frac{3}{1}$ ou $\alpha\frac{3}{2}$,

– un potentiomètre rotatif P α3 détectant l'angle α3 au niveau des roues 35 de la semi-remorque ;

– un appareil comparateur-amplificateur 4 qui reçoit et compare d'une part le signal de consigne venant de l'opérateur de rapport 3 et, d'autre part, le signal de mesure de P α3 et envoie un signal correcteur, proportionné à l'écart constaté, sur une servo-valve SV1 associée à un vérin hydraulique V1 dont la tige est reliée à un organe d'actionnement des roues 35 de la semi-remorque. La servo-valve SV1 envoie alors, sur l'une ou l'autre face du piston du vérin V1, une quantité de liquide sous pression proportionnelle à la grandeur du signal correcteur. Le liquide sous pression est fourni par une centrale hydraulique autonome CH que l'on a représentée installée sur la semi-remorque, mais qui pourrait être sur le tracteur.

On comprend donc que, en fonctionnement automatique en marche avant, le dispositif électronique selon l'invention procède continuellement à la comparaison de l'angle théorique et de l'angle réel de braquage des roues 35 de la semi-remorque ainsi que, si nécessaire, à la correction de la discordance éventuelle mesurée entre ces deux valeurs.

Pour le cas où l'angle α1 de braquage des roues du tracteur est employé comme valeur de référence pour la commande automatique des roues 35 de la semi-remorque, on utilise avantageusement, selon l'invention, une boucle complémentaire de correction . Celle-ci comprend un opérateur de rapport 5 transformant la valeur de l'angle α1 mesurée par l'appareil Pα1 dans un rapport $\frac{\alpha 2}{\alpha 1}$, et un comparateur amplificateur 6 mesurant l'écart entre la valeur théorique de l'angle α2 donnée par l'opérateur de rapport 5 et la valeur mesurée par l'appareil P α2. Le signal correcteur inversé issu de l'appareil 6 est alors ajouté algébriquement au moyen d'un totalisateur 7′, au signal correcteur de base défini par l'opérateur de rapport 3 réglé à la valeur α3.

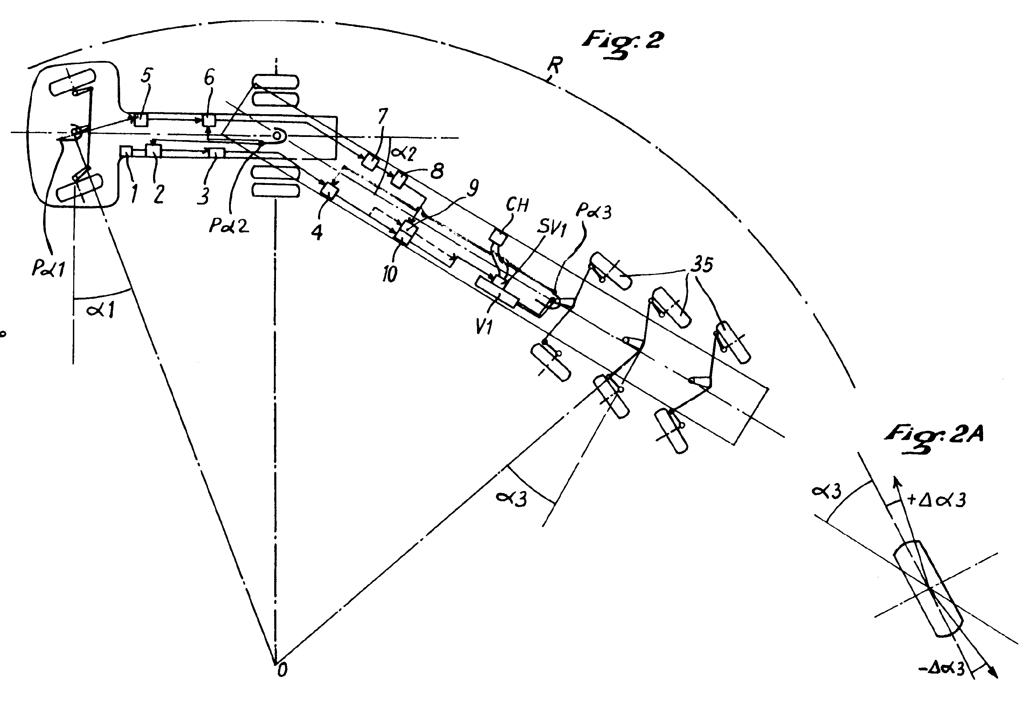

En référence maintenant à la figure 2 on a illustré une particularité du comportement en marche arrière de l'ensemble articulé, constitué par le tracteur et la semi-remorque. Alors qu'en fonctionnement en marche avant, comme on l'a vu en référence à la figure 1, l'angle correcteur ∆α3 doit s'additionner à l'angle mesuré α3 des roues 35 de la semi-remorque pour rapprocher l'arrière de celle-ci de la courbe circonscrite idéale R, en marche arrière l'obtention du même résultat se fait en soustrayant l'angle correcteur ∆α3 de l'angle mesuré α3.

Toutefois la définition du signe et de la grandeur de l'angle correcteur ∆α3 exige de connaître l'angle théorique α2 au pivot de l'organe d'attelage 34 et de la comparer à la valeur mesurée de l'angle effectif α2.

Le dispositif complémentaire permettant l'obtention d'une direction automatique des roues de la semi-remorque capable de marche arrière comprend alors, comme on le voit à la figure 2 :

– l'appareil de détection Pα1 de l'angle α1,

– l'appareil de détection Pα2 de l'angle α2,

– l'opérateur de rapport 5 transformant le signal Pα1 selon un rapport prédéfini $\frac{\alpha 2}{\alpha 1}$,

– le comparateur- amplificateur 6 qui reçoit et compare d'une part le signal de consigne α2 théorique et d'autre part le signal de mesure délivré par P α2, et qui envoie sur un organe de rapport 8 un signal correcteur proportionné à l'écart mesuré ,

– l'opérateur de rapport 8 transforme le signal correcteur issu du comparateur 6 selon une valeur prédéterminée d'amplification ou de diminution du signal de base (ou selon plusieurs valeurs sélectionnables) pour obtenir une plus ou moins grande rapidité de la correction d'erreur,

– l'inverseur 7 qui assure l'inversion de signe du signal correcteur sortant du comparateur 6,

– un appareil totalisateur algébrique 9 qui reçoit le signal de la consigne de base venant du comparateur 4 décrit à la figure 1 et le signal de correction d'erreurs propres à la marche arrière délivré par l'opérateur 8, réalise la somme algébrique de ces deux signaux et applique le signal correcteur ainsi obtenu à la servo-valve SV1 ,

– un sélecteur 10, relié d'une part au comparateur 4 et d'autre part au totalisateur 9 permet sélectivement de rendre le totalisateur 9 inactif en marche avant et actif en marche arrière.

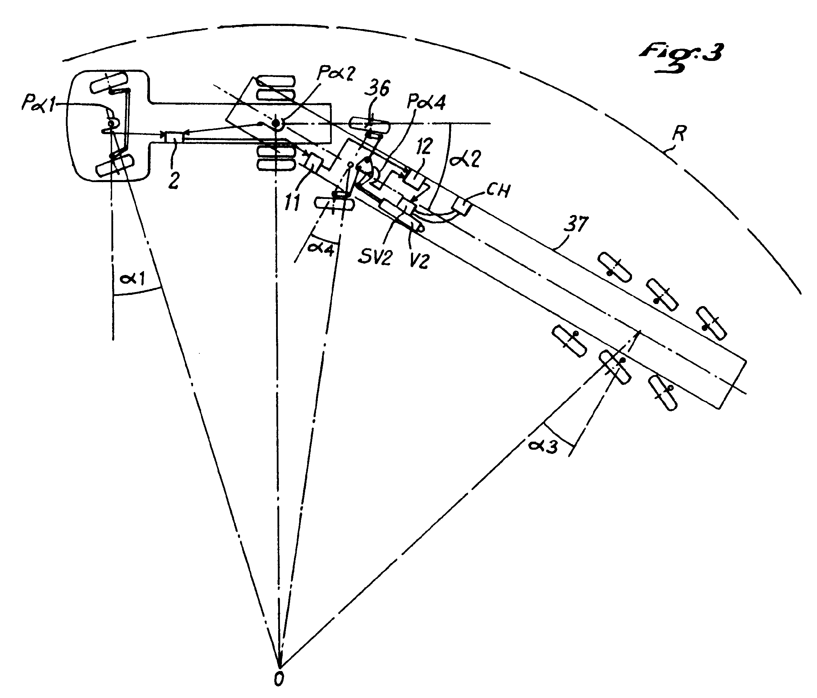

En référence maintenant à la figure 3, on décrira une variante relative à l'adaptation du système de commande selon l'invention à une semi-remorque dite à bissel intégré. On a représenté en 36 le bissel intégré à une semi-remorque 37 (le bissel est représenté avec un seul essieu, mais il pourrait en comporter plusieurs). Le tracé géométrique visible sur la figure montre que l'angle moyen α4 d'orientation des roues du bissel 36 est différent de l'angle moyen α3 d'orientation des roues arrière de la semi-remorque 37. Cela entraîne, à partir des organes déjà décrits à la figure 1 nécessaires à l'orientation des roues arrière selon l'angle α3, l'adjonction d'organes propres à l'orientation des roues du bissel 36 selon α4 et qui comprennent :

– un opérateur de rapport 11 transformant selon un rapport prédéfini $\frac{\alpha\,4}{\alpha\,1}$ le signal originel issu de

P $\alpha$1, ou selon un rapport $\frac{\alpha\,4}{\alpha\,2}$ le signal originel

issu de P $\alpha$2,
– un comparateur amplificateur 12 qui reçoit et compare d'une part le signal de consigne venant de l'opérateur 11 et d'autre part le signal de mesure de l'angle $\alpha$4 par un appareil de détection P $\alpha$4 disposé sur les roues du bissel 36. Ce comparateur 12 envoie un signal correcteur, proportionné à l'écart constaté, sur une servo-valve SV2 associée à un vérin hydraulique V2 équipant le bissel 36. La servo-valve SV2 envoie sur l'une ou l'autre face du vérin V2 une quantité de fluide sous pression proportionnelle à la grandeur du signal correcteur. Le fluide hydraulique sous pression est fourni par la centrale hydraulique autonome unique CH installée sur la semi-remorque ou sur le tracteur.

On comprend que, lors du fonctionnement en marche avant de l'ensemble articulé constitué par le tracteur et par la semi-remorque à bissel intégré, la direction des roues arrière de la semi-remorque et la direction des roues du bissel intégré sont commandées simultanément et séparément, avec une grande fiabilité, à partir soit de l'angle de braquage des roues du tracteur, soit de l'angle que fait la semi-remorque avec le tracteur.

On pourrait, sans sortir du cadre de l'invention, appliquer au dispositif pour bissel intégré à la semi-remorque représenté à la figure 3 un système du type de celui représenté à la figure 2 permettant de reculer en conservant la direction automatique des roues de la semi-remorque, tant les roues arrière que les roues du bissel intégré.

On comprendra que la description ci-dessus a été faite en relation avec une semi-remorque mais que, sans sortir de l'invention, elle peut s'appliquer à une remorque, la consigne de base étant alors mesurée au niveau de l'essieu avant pivotant de la remorque.

On notera que, pour la commodité du dessin, on a représenté une partie des moyens de détection et de traitement disposés sur le tracteur et l'autre partie sur la semi-remorque. En pratique toutefois, il pourra être avantageux de disposer le plus possible de ces éléments sur la semi-remorque et le moins possible sur le tracteur.

## Revendications

1. Dispositif de commande automatique des roues directrices d'un véhicule tracté, comprenant des moyens (P$\alpha$ 2) pour détecter sur le pivot d'attelage (34) une information de direction ($\alpha$ 2) relative à une commande de modification de l'angle entre le tracteur et le véhicule tracté, des moyens (3) pour traiter ladite information de direction et fournir un signal théorique ($\alpha$ 3) de direction des roues (35) du véhicule tracté, des moyens (P $\alpha$ 3) pour mesurer la valeur réelle de l'angle de direction des roues (35) dudit véhicule, des moyens (4) pour comparer ladite valeur théorique et ladite valeur réelle de l'angle ($\alpha$ 3) de direction et fournir un signal correcteur proportionné à l'écart constaté, et des moyens (SV1, V1) pour appliquer ladite correction aux roues (35) du véhicule tracté, caractérisé par des moyens (P $\alpha$ 1) pour recueillir sur les roues directrices (31) du tracteur une information de direction ($\alpha$ 1) relative à la commande de modification de l'angle entre le tracteur et le véhicule tracté et par un système complémentaire permettant la direction automatique en marche arrière, ledit système complémentaire comprenant des moyens (5) pour transformer dans un rapport défini

$(\frac{\alpha\,2}{\alpha\,1})$ une information de direction ($\alpha$ 1) mesurée sur

les roues directrices du tracteur, des moyens (6) pour comparer l'information transformée reçue des moyens de transformation (5) et une information de direction ($\alpha$ 2) mesurée au niveau de l'attelage (34) entre le tracteur et le véhicule tracté et pour fournir un signal correcteur proportionné à l'écart mesuré, des moyens (7) d'inversion de signe du signal correcteur issu des moyens de comparaison (6), et des moyens de totalisation (9) réalisant la somme algébrique du signal correcteur issu des moyens (7) d'inversion et du signal correcteur issu des moyens de comparaison (4) du dispositif de commande automatique de marche avant, le signal correcteur final correspondant à ladite somme algébrique étant appliqué auxdits moyens (SV1, V1) de correction de la direction des roues (35) du véhicule tracté.

2. Dispositif selon la revendication 1, caractérisé par des moyens de transformation (8) disposés entre les moyens de comparaison (6) et les moyens de totalisation algébrique (9) pour transformer le signal correcteur selon une ou plusieurs valeurs prédéterminées d'amplification ou de diminution.

3. Dispositif selon la revendication 1 ou la revendication 2, caractérisé en ce qu'il comprend, pour la correction de la commande automatique en marche avant, des moyens de traitement (5) pour transformer dans un rapport déterminé $(\frac{\alpha\,2}{\alpha\,1})$ l'information de

direction ($\alpha$ 1) mesurée sur les roues directrices du tracteur, des moyens de comparaison (6) pour comparer l'information transformée reçue des moyens de traitement (5) et une information de direction ($\alpha$ 2) mesurée au niveau de l'attelage (34) entre le tracteur et le véhicule tracté et pour fournir un signal correcteur proportionné à l'écart ainsi mesuré, et des moyens (7') de totalisation algébrique pour réaliser la somme algébrique du signal de consigne ($\alpha$ 3) issu des moyens de traitement (3) et du signal correcteur issu desdits moyens de comparaison (6), ladite somme algébrique de signaux étant appliquée aux moyens (SV1, V1) de correction des roues (35) du véhicule tracté.

4. Dispositif selon l'une quelconque des revendications précédentes pour la commande automatique des roues (36) d'un bissel intégré à une semi-remorque, caractérisé en ce qu'il comprend des moyens de traitement (11) transformant selon un rapport défini l'information (α 1, α 2) de direction relative à une commande de modification de l'angle entre le tracteur et la semi-remorque, des moyens de comparaison (12) pour comparer d'une part le signal de consigne d'orientation des roues du bissel venant desdits moyens de traitement (11) et d'autre part une mesure de la valeur réelle de l'angle de direction (α 4) des roues du bissel et pour produire un signal correcteur proportionné à l'écart constaté, et des moyens de commande (SV2, V2) pour appliquer ladite correction aux roues (36) du bissel.

## Patentansprüche

1. Vorrichtung zum automatischen Betätigen der Lenkräder eines gezogenen Fahrzeugs, welche umfaßt Mittel (P α 2) zum Aufspüren einer Richtungsinformation (α 2) am Drehzapfen der Zugeinrichtung (34) bezüglich eines Befehls zum Ändern des Winkels zwischen Zugmaschine und gezogenem Fahrzeug, Mittel (3) zum Behandeln dieser Richtungsinformation und zum Liefern eines theoretischen Richtungssignals (α 3) der Räder (35) des gezogenen Fahrzeugs, Mittel (P α 3) zum Messen des wirklichen Werts des Richtungswinkels der Räder (35) des genannten Fahrzeugs, Mittel (4) zum Vergleichen des theoretischen Werts und des wirklichen Werts des Richtungswinkels (α 3) und Liefern eines Korrektursignals proportional zur festgestellten Abweichung sowie Mittel (SV1, V1) zum Anwenden dieser Korrektur auf die Räder (35) des gezogenen Fahrzeugs, gekennzeichnet durch Mittel (P α 1) zum Erfassen einer Richtungsinformation (α 1) an den Lenkrädern (31) der Zugmaschine bezüglich des Befehls zum Ändern des Winkels zwischen Zugmaschine und gezogenem Fahrzeug und durch ein Ergänzungssystem zum Ermöglichen eines automatischen Lenkens bei Rückwärtsfahrt, wobei dieses ergänzende System umfaßt Mittel (5) zum Wandeln einer an den Lenkrädern der Zugmaschine gemessenen Richtungsinformation (α 1) in einem bestimmten Verhältnis (α 2 : α 1), Mittel (6) zum Vergleichen der von den Wandlungsmitteln (5) erhaltenen gewandelten Information und einer am Zuggeschirr zwischen Zugmaschine und gezogenem Fahrzeug gemessenen Richtungsinformation (α 2) und zum Liefern eines Korrektursignals proportional zur gemessenen Abweichung, Mittel (7) zur Vorzeichenumkehr des von den Vergleichsmitteln (6) stammenden Korrektursignals sowie Additionsmittel (9) zum Ermitteln der algebraischen Summe des von den Umkehrmitteln (7) stammenden Korrektursignals und des von den Vergleichsmitteln (4) der Vorrichtung zum automatischen Steuern der Vorwärtsfahrt stammenden Korrektursignals, wobei das der genannten algebraischen Summe entsprechende endgültige Korrektursignal an die genannten Mittel (SV1, V1) zur Richtungskorrektur der Räder (35) des gezogenen Fahrzeugs gelegt wird.

2. Vorrichtung nach Anspruch 1, gekennzeichnet durch zwischen den Vergleichsmitteln (6) und den Mitteln (9) zum algebraischen Summieren angeordnete Wandlungsmittel (8) zum Wandeln des Korrektursignals nach einem oder mehreren vorgegebenen Verstärkungs- oder Abschwächungswerten.

3. Vorrichtung nach Anspruch 1 oder Anspruch 2, dadurch gekennzeichnet, daß sie zur Korrektur der automatischen Steuerung bei Vorwärtsfahrt umfaßt Behandlungsmittel (5) zum Wandeln der an den Lenkrädern der Zugmaschine gemessenen Richtungsinformation (α 1) in einem bestimmten Verhältnis (α 2:α 1), Vergleichsmittel (6) zum Vergleichen der von den Behandlungsmitteln (5) erhaltenen gewandelten Information und einer am Zuggeschirr zwischen Zugmaschine und gezogenem Fahrzeug gemessenen Richtungsinformation (α 2) und zum Liefern eines Korrektursignals proportional zur so gemessenen Abweichung sowie Mittel (7') zum algebraischen Addieren zwecks Ermittlung der algebraischen Summe des von den Behandlungsmitteln (3) stammenden Anweisungssignals (α 3) und des von den Vergleichsmitteln (6) stammenden Korrektursignals, wobei die algebraische Summe der Signale an die Korrekturmittel (SV1, V1) der Räder (35) des gezogenen Fahrzeugs gelegt werden.

4. Vorrichtung nach einem oder mehreren der vorhergehenden Ansprüche für die automatische Steuerung der Räder (36) eines in einen Sattelauflieger integrierten Lenkgestells, dadurch gekennzeichnet, daß sie umfaßt Behandlungsmittel (11) zum Wandeln der Richtungsinformation (α 1, α 2) nach einem bestimmt en Verhältnis bezüglich eines Befehls zum Ändern des Winkels zwischen Zugmaschine und Sattelauflieger, Mittel (12) zum Vergleichen einerseits des von den Behandlungsmitteln (11) stammenden Richtungsanweisungssignals der Räder des Lenkgestells und andererseits einer Messung des wirklichen Werts des Richtungswinkels (α 4) der Räder des Lenkgestells sowie zum Erzeugen eines Korrektursignals proportional zur festgestellten Abweichung, und Steuermittel (SV2, V2) zum Anwenden der genannten Korrektur auf die Räder (36) des Lenkgestells.

## Claims

1. Device for automatic control of the driving wheels of a tractor-drawn vehicle, comprising means (Pα2) to detect on the coupling pin (34) directional data (α2) relating to a control for modifying the angle between the tractor and the tractor-drawn vehicle, means (3) for processing the said directional data and supplying a theoretical signal (α3) of the direction of the wheels (35) of the tractor-drawn vehicle, means (Pα3) for measuring the actual value of the angle of direction of the wheel (35) of the said vehicle, means (4) for comparing the said theoretical value and the said real value of the angle (α3) of direction and supplying a correcting signal proportionate to the distance ascertained, and means (SV1, V1) for applying the said correction to the wheels (35) of the tractor-drawn vehicle, characterised by means (Pα1) for obtaining on the driving wheels (31) of the tractor directional data (α1) relating to the control of modification of the angle between the tractor and the tractor-drawn vehicle and, by a complementary system, permitting automatic steering in reverse, the said complementary system comprising means (5) for transforming in a defined ratio$(\frac{\alpha 2}{\alpha 1})$ directional data (α1) measured on the driving wheels of the tractor, means (6) for comparing the transformed data received from the transformation means (5) and directional data (α2) measured at the level of the coupling (34) between the tractor and the tractor-drawn vehicle and for supplying a correcting signal proportionate to the distance measured, means (7) for sign reversal to the correcting signal supplied by the comparison means (6), and totalling means (9) which work out the algebraic sum the correcting signal supplied by the sign reversing means (7) and the correcting signal supplied by the comparison means (4) of the device for automatic control of forward motion, the final correcting signal corresponding to the said algebraic sum being applied to the said means (SV1, V1) for correcting the direction of the wheels (35) of the tractor-drawn vehicle.

2. Device as claimed in claim 1, characterised by transformation means (8) arranged between the comparison means (6) and the algebraic totalling means (9) for transforming the correcting signal in accordance with one or more predetermined values for increasing or decreasing.

3. Device as claimed in claim 1 or claim 2, characterised in that for the correction of the automatic control in forward motion it comprises processing means (5) for transforming in a predetermined ratio $(\frac{\alpha 2}{\alpha 1})$ directional data (α1) measured on the driving wheels of the tractor, comparison means (6) for comparing the transformed data received from the processing means (5) and directional data (α2) measured at the level of the coupling (34) between the tractor and the drawn vehicle and for supplying a correcting signal proportionate to the distance thus measured, and algebraic totalling means (7') for working out the algebraic sum of the instruction signal (α3) supplied by the processing means (3) and the correcting signal supplied by the said comparison means (6), the said algebraic sum of signals being applied to the means (SV1, V1) for correcting the wheels (35) of the tractor-drawn vehicle.

4. Device as claimed in any one of the preceding claims for the automatic control of the wheels (36) of a bissel integrated with a trailer, characterised in that it comprises processing means (11) which in accordance with a defined ratio transform directional data (α1, α2) relating to a control for modification of the angle between the tractor and the trailer, comparison means (12) for comparing on the one hand the instruction signal for orientation of the wheels of the bissel coming from the said processing means (11) and on the other hand a measurement of the actual value of the angle of direction (α4) of the wheels of the bissel and for producing a correcting signal proportionate to the distance ascertained, and control means (SV2, V2) for applying the said correction to the wheels (36) of the bissel.

Fig.1

Fig. 2

Fig. 2A

EP 0 343 049 B1

Fig.3